# EUROPÄISCHE PATENTSCHRIFT

(11) **EP 3 053 253 B1**
(45) Veröffentlichungstag und Bekanntmachung des Hinweises auf die Patenterteilung: **15.04.2020**
(21) Anmeldenummer: 14780463.7
(22) Anmeldetag: 01.10.2014
(51) Int. Cl.: H02K 5/173, H02K 1/27, H02K 21/22, H02K 5/16, H02K 7/14

(54) **ELEKTROMOTOR**
ELECTRIC MOTOR
MOTEUR ÉLECTRIQUE

(30) Priorität: 02.10.2013 DE 102013110999
(43) Veröffentlichungstag der Anmeldung: 10.08.2016
(73) Patentinhaber: EBM-PAPST ST. GEORGEN GMBH & CO. KG, 78112 St. Georgen (DE)
(72) Erfinder: GINTER, Andreas, 78713 Schramberg-Heiligenbronn (DE); FLAIG, Markus, 78739 Hardt (DE)
(74) Vertreter: Staeger & Sperling Partnerschaftsgesellschaft mbB
(86) Internationale Anmeldenummer: PCT/EP2014/071019
(87) Internationale Veröffentlichungsnummer: WO 2015/049274

(56) Entgegenhaltungen:
- DE-A1-102006 059 135
- DE-A1-102009 031 371
- JP-A- 2005 065 388
- US-A1- 2004 140 725

## Beschreibung

Die Erfindung betrifft einen Elektromotor mit einem Innenstator und einem Außenrotor.

Üblicherweise sind Elektromotoren, welche einen Innenstator und einen Außenrotor aufweisen, mit Magneten in Form von ringförmigen Permanentmagneten ausgestattet, Der Außenrotor weist ein hohlzylinderartig oder topfartig ausgebildetes Rotorgehäuse auf. Der Innenstator ist im Inneren des Rotorgehäuses, somit vom Rotorgehäuse überwiegend umfasst, aufgenommen, sodass der Außenrotor um den Innenstator drehbar ist. Ein ringfömig geformter Permanentmagnet hat eine Außenkontur, deren Form an die Innenfläche des Rotorgehäuses angepasst ist und somit einfach an dieser fixiert werden kann. Ein solcher Elektromotor wird in der

DE 10 2011 118 565 A1 gezeigt.

Die US 2004/140725 A1 offenbart zudem einen Elektromotor mit einem Außenrotor, der außerhalb des Stators angeordnet ist. Der Rotor hat ein ringförmiges Schwungradglied, auf dessen zylindrischer Innenseite flache plattenartige Permanentmagnete in gleichen Abständen angeordnet sind. Jeder der Permanentmagnete hat eine äußere und innere flache Oberfläche, und jeder äußere flache Oberfläche ist in einer flachen Nut gesichert, welche in der inneren zylindrischen Oberfläche des Schwungradglieds ausgebildet ist. Die Sicherung erfolgt mittels eines Klebers.

Darüber hinaus lehrt die JP 2005 065388 A einen Innenläufermotor, der zur Befestigung von Magneten eine einzelne den Rotor auf einer einzelnen Aufnahmefläche in Umfangsrichtung umlaufende Nut aufweist.

Die Aufgabe der vorliegenden Erfindung ist es nun, einen Elektromotor bereitzustellen, welcher eine verbesserte Leistungsfähigkeit unter gleichzeitiger einfacher Herstellbarkeit aufweist.

Die Aufgabe wird erfindungsgemäß durch einen Elektromotor mit den Merkmalen das Patentanspruchs 1 gelöst. Vorteilhafte Ausgestaltungen mit zweckmäßigen und nicht-trivialen Weiterbildungen der Erfindung sind in den jeweiligen Unteransprüchen angegeben.

Erfindungsgemäß weist der Elektromotor einen Innenstator und einen Außenrotor auf. Der Außenrotor hat ein Rotorgehäuse und eine Mehrzahl von Magneten und ist zur Drehung um eine Rotationsachse ausgebildet. Die Magneten sind in Form von Stabmagneten ausgebildet. Das Rotorgehäuse hat eine Innenfläche, ein erstes Ende und ein dem ersten Ende gegenüber liegendes zweites Ende. Die Innenfläche weist zur Aufnahme der Magneten Aufnahmeflächen auf welche Aufnahmeflächen jeweils zur Anordnung eines der Magneten dienen und eine nutartige Vertiefung aufweisen, und welche Magneten jeweils mit Hilfe eines adhäsiven Befestigungsmittels an einer der Aufnahmeflächen fixiert sind, wobei am zweiten Ende (6) des Rotorgehäuses ein erster Lagersitz zur Aufnahme eines ersten Lagerkäfigs ausgebildet ist.

Es werden somit bevorzugt Permanentmagneten in Form von stabförmigen Permanentmagneten verwendet, welche im Weiteren als Stabmagneten bezeichnet sind. Der Vorteil ist ein gegenüber üblichen ringförmigen Permanentmagneten vergrößerter magnetischer Fluss, welcher mit Hilfe der Stabmagneten erreichbar ist, sodass eine verbesserte Leistungsfähigkeit des Elektromotors realisierbar ist. Entsprechende Magneten aus einem permanentmagnetischen Werkstoff weisen permanentmagnetische Eigenschaften auf.

Ringförmige Permanentmagneten mit radialer Magnetisierung werden überwiegend in Form von kunststoffgebundenen isotropen Magneten hergestellt, bei denen isotrope permanentmagnetische Partikel in einer Kunststoffmatrix eingebettet sind.

Magnetisch anisotrope permanentmagnetische Partikel haben eine Vorzugsrichtung, in der sie ein starkes Magnetfeld und damit einen starken magnetischen Fluss erzeugen können, der üblicherweise stärker ist als bei magnetisch isotropen permanentmagnetischen Werkstoffen. In der von der Vorzugsrichtung abweichenden Richtung ist das erzeugbare Magnetfeld dagegen deutlich kleiner. Daher ist zur Erlangung eines starken Permanentmagneten eine Ausrichtung der anisotropen Magneten zum Zeitpunkt der Herstellung vorteilhaft. Eine solche Ausrichtung ist bei ringförmigen Magneten mit radialer Magnetisierung nur sehr schwer möglich. Bei stabförmigen Magneten kann dagegen das Magnetmaterial plattenförmig in einem Magnetfeld hergestellt werden, wodurch bei der Herstellung eine Ausrichtung des anisotropen Materials in die Vorzugsrichtung erreicht werden kann. Anschließend können die stabförmigen Magneten beispielsweise herausgesägt werden. Zudem ist neben der Herstellung als kunststoffgebundener stabförmiger Magnet auch eine Herstellung durch Sintern möglich, wodurch mehr Magnetmaterial pro Volumen vorhanden ist, da kein oder nur wenig Kunststoff vorhanden ist. Dies führt zu sehr starken Magneten aus einem gesinterten Werkstoff.

Zudem sind die Toleranzen bei der Fügung eines ringförmigen Permanentmagneten in einem Rotorgehäuse kritischer als bei einem stabförmigen Permanentmagneten, da eine Toleranz des stabförmigen Permanentmagneten zwar zu einer Toleranz des Luftspalts, also des nichtmagnetischen Bereichs zwischen dem Innenrotor und dem Permanentmagneten führt, eine Abweichung beim Außenumfang eines ringförmigen Permanentmagneten aber dazu führen kann, dass der Permanentmagnet entweder nicht in das Rotorgehäuse passt, wenn er zu groß ist, oder aber nicht richtig befestigt werden kann, wenn er zu klein ist. Zudem führt ein auf Grund von Toleranzen verringerter Luftspalt zwischen den Rotormagneten und dem Innenstator zu einer Verringerung der Leistung, und ein ungenauer Sitz des Rotormagneten führt zu einer unerwünschten Unwucht.

Der Aufbau eines entsprechenden Rotorgehäuses ist zwar aufwändiger als bei einem Rotorgehäuse für ringförmige Magneten, es können aber vorteilhafte Stabmagneten verwendet werden, die günstiger und stärker sein können als ringförmige Magneten. Da das Rotorgehäuse bereits aufwändiger ausgeführt ist, kann vorteilhaft am zweiten Ende des Rotorgehäuses, also im Bereich des zweiten Endes des Rotorgehäuses, der erste Lagersitz zur Aufnahme des ersten Lagerkäfigs ausgebildet werden, so dass das Rotorgehäuse zusätzliche Funktionen übernehmen kann. Der Lagersitz ermöglicht die Aufnahme bspw. eines Wälzlagers, insbesondere eines Kugellagers, bei bevorzugter gleichzeitig möglicher kostengünstiger Herstellung durch das Tiefziehverfahren.

Vorteilhafterweise sind die Magneten mit Hilfe eines adhäsiven Befestigungsmittels an der Innenfläche bzw. genauer ausgedrückt an den Aufnahmeflächen fixiert. Adhäsive Befestigungsmittel ermöglichen eine einfache Befestigung der Stabmagneten an den bevorzugt überwiegend plan ausgebildeten Aufnahmeflächen. Bevorzugt lassen sich insbesondere die Stabmagneten sozusagen von innen nach außen auf die Aufnahmeflächen in ihrer entsprechenden Endposition positionieren. Das bedeutet, dass die Stabmagneten zur Fixierung in ihrer Endposition, ausgehend von einer ersten Montageposition, welche sich in einem vom Rotorgehäuses umfassten Innenbereich befindet, im Wesentlichen in radialer Richtung bewegt werden können, um somit plan auf ihren entsprechenden Aufnahmeflächen zu liegen. Der Vorteil dieser Montage ist, dass das Befestigungsmittel, welches auf die Aufnahmefläche aufgebracht wurde, nicht verschoben wird, sondern überwiegend an der Aufnahmefläche bleibt. Würde beispielsweise der Stabmagnet, von einem ersten Ende des Rotorgehäuses ausgehend, auf seine vorgesehene Aufnahmefläche in Längsrichtung des Rotorgehäuses geschoben werden, bis seine Endposition erreicht ist, würde eine bestimmte Menge des Befestigungsmittels ebenfalls verschoben werden, sodass daraus eine schlechte Fixierung des Stabmagneten resultieren könnte.

Bevorzugt ist das Rotorgehäuse zumindest bereichsweise hohlzylinderartig ausgebildet, beispielsweise mit einem zumindest bereichsweise polygonalen Querschnitt. Anders ausgedrückt kann die Querschnittskontur des Rotorgehäuses zumindest bereichsweise als ringförmig bezeichnet werden.

In einer bevorzugten Ausgestaltung des Elektromotors weist die Innenfläche des Rotorgehäuses zur Aufnahme der Stabmagneten eine zur Anzahl der Stabmagneten korrespondierende Anzahl an Aufnahmeflächen auf, welche sowohl in Richtung parallel zur Rotationsachse des Rotorgehäuses als auch in einer Umfangsrichtung der Innenfläche überwiegend plan, d. h. eben ausgebildet sind. Mit Hilfe dieser überwiegend plan ausgebildeten Aufnahmeflächen ist es möglich, einfache Stabmagneten einzusetzen, welche z.B. quaderförmig ausgebildet sind bzw. in ihrem Querschnitt quadratisch oder rechteckig geformt sind. Diese Stabmagneten sind kostengünstig herzustellen, denn es bedarf keiner aufwendigen Bearbeitung einer der Innenfläche zugewandten Außenkontur der stabförmigen Permanentmagneten. Diese stabförmigen Permanentmagneten können somit auf einfache Weise hergestellt werden.

Bevorzugt ist die Erstreckung der Aufnahmeflächen jeweils in einer ersten Richtung, welche parallel zur Rotationsachse ist, größer als die Erstreckung des zugeordneten Magneten in die erste Richtung, und die Erstreckung der Aufnahmeflächen ist jeweils in einer zweiten Richtung, welche senkrecht zur ersten Richtung ist, größer als die Erstreckung des zugeordneten Magneten in die zweite Richtung. Hierdurch ist eine gute Montage der Magneten an den Aufnahmeflächen möglich, und bei der Verwendung eines Klebstoffs zur Fixierung der Magneten kann dieser an allen Seiten verdrängt werden.

Bevorzugt weisen die Aufnahmeflächen und die zugeordneten Magneten jeweils einen gemeinsamen Verbindungsbereich auf, in dem sie benachbart angeordnet sind, wobei sich die Aufnahmeflächen jeweils auf allen Seiten des Verbindungsbereichs über diesen hinaus erstrecken. Dies ermöglicht eine Anordnung bzw. ein Anpressen aller stabförmigen Magneten durch eine Halte- und Anpressvorrichtung und ein anschließendes Aushärten eines ggf. vorhandenen Klebstoffs. Außerdem ermöglicht eine entsprechende Ausformung eine Herstellung des Rotorgehäuses durch Tiefziehen.

Bevorzugt ist die Querschnittskontur des Übergangs der Innenfläche zwischen zwei benachbarten Aufnahmeflächen konkav ausgebildet. Dies ermöglicht die Verteilung eines adhäsiven Befestigungsmittels über den gesamten Umfang durch Rotation und axiale Verschiebung einer Einspritzdüse für das Befestigungsmittel und erleichtert die Herstellung des Rotorgehäuses über ein Tiefziehverfahren.

Bevorzugt weist die Innenfläche des Rotorgehäuses zur Aufnahme der Stabmagneten eine polygonartig ausgebildete Querschnittskontur auf. Mit Hilfe der polygonartig, also mehrkantartig ausgebildeten Innenfläche liegen abschnittsweise die überwiegend plan ausgebildeten Aufnahmeflächen zur Aufnahme der Stabmagneten vor. Eine Außenfläche des Rotorgehäuses kann ebenfalls mit einer polygonartigen, der Innenfläche entsprechenden, Querschnittskontur ausgestaltet sein, allerdings ist auch eine kreisförmige Querschnittskontur der Außenfläche denkbar. Diese polygonartig ausgebildete Querschnittskontur der Innenfläche lässt sich mit Hilfe eines Tiefziehverfahrens herstellen, da keine Hinterschnitte vorliegen.

Bevorzugt weist die Innenfläche eine 14-Kant-Polygon-Querschnittskontur auf, sodass vierzehn Stabmagneten aufgenommen werden können. Diese Anzahl der Stabmagneten hat sich insbesondere bei einem Elektromotor mit einem Außenrotor zum Betrieb einer Förderrolle als geeignet erwiesen. Mit Hilfe dieser 14-Kant-Polygon-Querschnittskontur ist es möglich, die zur Realisierung einer bestimmten Leistung erforderliche Anzahl von Stabmagneten vorteilhaft zu positionieren, welche eine hinreichende, zur Realisierung dieser bestimmten Leistung vorteilhafte Breite in Umfangsrichtung des Rotorgehäuses aufweisen. Gleichzeitig können optimierte und ebenso mit dem Herstellungsprozess verträgliche Übergänge zwischen jeweils zwei Aufnahmeflächen geschaffen werden, sodass sich ein vorhandener Bauraum optimal nutzen lässt, ohne mögliche Einbußen einer Motorleistung. Bevorzugt ist ein zwölf Nuten bzw. Wicklungshohlräume zurjeweiligen Aufnahme einer Statorwicklung aufweisender Innenstator im Außenrotor, d.h. zumindest teilweise vom Außenrotor umfasst, positioniert.

Erfindungsgemäß weist die Aufnahmefläche in eine Richtung parallel zur Rotationsachse eine nutartige Vertiefung auf. Diese in Längsrichtung nutartig ausgebildete Vertiefung sichert einen definierten Bereich zur Aufnahme eines adhäsiven Befestigungsmittels (Fixiermittels) zur Fixierung der Stabmagneten an der Innenfläche des Rotorgehäuses, da in der nutartigen Vertiefung, ähnlich einer Rinne, das adhäsive Befestigungsmittel aufgenommen wird. Die Ausrichtung in Längsrichtung ist positiv, das dies zum einen eine Herstellung durch Tiefziehen erleichtert, und zum anderen kann an den axialen Seiten der Magneten mehr Platz für das austretende adhäsive Befestigungsmittel, also beispielsweise den Kleber, vorgesehen werden. Alternativ können die nutartigen Vertiefungen beispielsweise auch schräg oder in Umfangsrichtung verlaufen. Erfindungsgemäß besitzt die nutartige Vertiefung in Richtung parallel zur Rotationsachse eine erste Länge, welche größer ist als eine in Richtung parallel zur Rotationsachse ausgebildete zweite Länge des an der Aufnahmefläche fixierten Stabmagneten. Dies hat den Vorteil, dass sich überschüssiges adhäsives Befestigungsmittel in der Vertiefung in den Bereichen, welche nicht von den Stabmagneten bedeckt werden, sammeln kann, ohne dass eine plane Fixierung des Stabmagneten am Magnetsitz durch überschüssiges adhäsives Befestigungsmittel aufgehoben wird. Im Montageprozess wird die Innenwand des Rotorgehäuses mit dem adhäsiven Befestigungsmittel versehen, bevor der Stabmagnet auf die überwiegend plan ausgebildete, die Vertiefung aufweisende Aufnahmefläche gedrückt wird. Würde die erste Länge der Vertiefung der zweiten Länge des Stabmagneten entsprechen, könnte überschüssiges adhäsives Befestigungsmittel nur schlecht in Längsrichtung entweichen und würde sich an einer der Vertiefung zugewandt ausgebildeten Fixierfläche des Stabmagneten ansammeln, derart, dass der Stabmagnet eine falsche Positionierung bzw. Endlage am Ende des Montageprozesses aufweisen könnte, da das überschüssige adhäsive Befestigungsmittel nur schlecht entweichen könnte und es dann zu einer Anhebung und/oder Schrägstellung des Stabmagneten aufgrund des überschüssigen adhäsiven Befestigungsmittels kommen könnte. Durch die falsche Positionierung wäre ein Betrieb des Elektromotors aufgrund möglicher Berührungen zwischen Innenstator und Außenrotor im Bereich des falsch positionierten Stabmagneten nicht gesichert. Somit führt diese bevorzugte Ausgestaltung des Elektromotors zu einem besseren Betrieb und zu einer besseren Montage desselben.

In einer weiteren bevorzugten Ausgestaltung des Elektromotors weist das Rotorgehäuse einen Innendurchmesser auf, welcher ausgehend von einem ersten Ende bis zu einem dem ersten Ende gegenüberliegenden zweiten Ende konstant oder abnehmend ausgebildet ist. Dies bietet den Vorteil, dass ein Tiefziehverfahren zur Herstellung besonders gut geeignet ist und somit eine kostengünstige Herstellung ermöglicht.

Gemäß einer bevorzugten Ausführungsform weist das Rotorgehäuse am zweiten Ende einen ersten Rotorgehäuseabschnitt mit einem Innendurchmesser auf, welcher Innendurchmesser kleiner ist als der Innendurchmesser des Rotorgehäuses in einem zweiten Rotorgehäuseabschnitt, in dem die Magneten befestigt sind, um hierdurch am zweiten Ende den Lagersitz zu bilden. Diese Ausbildung des Rotorgehäuses ermöglicht eine vorteilhafte Ausbildung des Lagersitzes als Teil des Rotorgehäuses.

Gemäß einer bevorzugten Ausführungsform verjüngt sich das Rotorgehäuse in einem dritten Rotorgehäuseabschnitt, welcher zwischen dem ersten Rotorgehäuseabschnitt und dem zweiten Rotorgehäuseabschnitt angeordnet ist, unter Ausbildung einer Schulter. Dies spart einerseits durch die Verjüngung des Rotorgehäuses gewicht, und zum anderen ermöglicht diese Ausgestaltung eine bevorzugte Ausgestaltung des Rotorgehäuses als Tiefziehteil mit integriertem Lagersitz.

Gemäß einer bevorzugten Ausführungsform sind der Lagersitz und das Rotorgehäuse einstückig ausgebildet. Während bei einem üblichen Rotorgehäuse ein rundes Rohr verwendet werden kann, an dem axial jeweils ein Flansch befestigt wird, ist das Rotorgehäuse für die Stabmagneten durch die Ausbildung der Aufnahmeflächen komplizierter aufgebaut. Bei dieser komplizierteren Ausgestaltung des Rotorgehäuse hat es sich als vorteilhaft erwiesen, den Lagersitz in das Rotorgehäuse zu integrieren. So kann der Lagersitz beispielsweise bei einer Herstellung durch Tiefziehen durch zusätzliche Tiefziehschritte mit ausgebildet werden, die gut in den Tiefziehvorgang integriert werden können. Die anschließende Montage wird erleichtert, da das Lager direkt in das Rotorgehäuse eingesetzt werden kann, ohne die Notwendigkeit einer zusätzlichen Montage eines axialen Flanschs.

Bevorzugt nimmt der Abstand zwischen zwei benachbarten Magneten in einem vorgegebenen Innenflächenabstand von der jeweils zugeordneten Innenfläche des Rotorgehäuses bei zunehmendem Innenflächenabstand zumindest bereichsweise ab. Dies ermöglicht ein besseres Greifen der Magneten bei der Montage im Gegensatz zu einer Anordnung, bei der der Abstand zunimmt oder gleich bleibt.

Bevorzugt ist zwischen zwei Magneten immer ein vorgegebener Mindestabstand vorgesehen. Dadurch, dass sich die Magneten nicht berühren, wird das Halten der Magneten durch eine Halte- und Anpressvorrichtung bei der Montage vereinfacht.

Bevorzugt hat eine Antriebsrolle einen Elektromotor nach einem der vorhergehenden Ansprüche. Dies ermöglicht eine große mechanische Leistung der Antriebsrolle bei einer gegebenen Baugröße der Antriebsrolle, und eine solche Antriebsrolle ist daher besonders vorteilhaft.

Weitere Vorteile, Merkmale und Einzelheiten der Erfindung ergeben sich aus der nachfolgenden Beschreibung bevorzugter Ausführungsbeispiele sowie aus den Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Aus Gründen der Übersichtlichkeit sind zweckmäßigerweise in den Figuren überwiegend nur die Merkmale mit einem Bezugszeichen versehen, die der entsprechenden Figurenbeschreibung dienen. Aus Gründen der Übersichtlichkeit ist es möglich, dass die Elemente nicht in allen Figuren mit ihrem Bezugszeichen versehen sind ohne jedoch ihre Zuordnung zu verlieren. Dabei zeigen:
- Fig. 1: in einer perspektivischen Außenansicht einen erfindungsgemäßen Elektromotor,
- Fig. 2: in einer perspektivische Ansicht einen Außenrotor des Elektromotors,
- Fig. 3: in einem Querschnitt den Außenrotor des Elektromotors gemäß Fig. 1,
- Fig. 4: in einem Längsschnitt das Rotorgehäuse des Elektromotors gemäß Fig. 1,
- Fig. 5: in einem Querschnitt das Rotorgehäuse und den Stator des Elektromotors gemäß Fig. 1,
- Fig. 6: in einer ersten Seitenansicht das Rotorgehäuse und einen Rollenflansch in einem gefügten Teilezustand,
- Fig. 7: in einer zweiten Seitenansicht das Rotorgehäuse und den Rollenflansch in einem gefügten Teilezustand,
- Fig. 8: in der ersten Seitenansicht das Rotorgehäuse und einen Rollenflansch in einem ungefügten Teilezustand,
- Fig. 9: in der zweiten Seitenansicht das Rotorgehäuse und den Rollenflansch in einem ungefügten Teilezustand,
- Fig. 10: in einem Querschnitt den Elektromotor gemäß Fig. 1 mit schematischer Darstellung eines Befestigungsmittels,
- Fig. 11: in einer Draufsicht von innen einen Magneten des Elektromotors von Fig. 1, und
- Fig. 12: in einem Längsschnitt den Elektromotor mit einer daran befestigten Antriebsrolle.

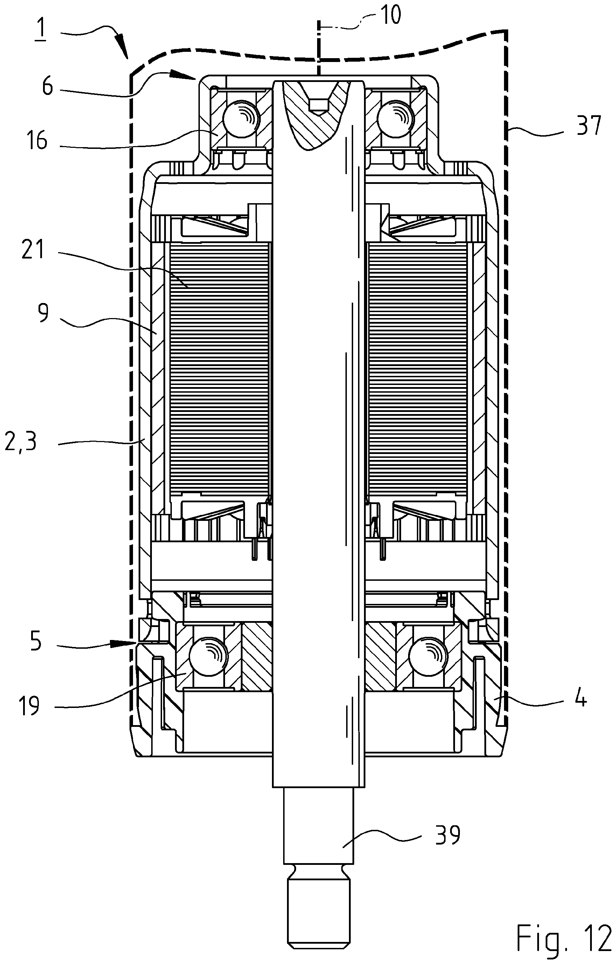

**Fig. 12** zeigt einen Elektromotor 1 in Form eines Außenläufermotors. Der Elektromotor 1 weist einen Innenstator 21 und einen den Innenstator 21 weitgehend umfassenden Außenrotor 2 mit einem Rotorgehäuse 3 auf. Ein Rollenflansch 4 zur gesicherten Aufnahme und Positionierung einer Antriebsrolle 37 ist an einem ersten Ende 5 des Rotorgehäuses 3 ausgebildet. Ein dem ersten Ende 5 gegenüberliegendes zweites Ende 6 des Rotorgehäuses 3 ist zur Aufnahme eines ersten Lagers 16 zur drehbaren Lagerung des Außenrotors 2 um eine Rotationsachse 10 des Elektromotors 1 ausgebildet, und bevorzugt ist ein zweites Lager 19 im Rollenflansch 4 angeordnet. Eine feststehende Achse 39, die beispielsweise an einer - nicht dargestellten - Anlage mit Antriebsrollen befestigt ist, dient als Lagerstelle für die Lager 16, 19.

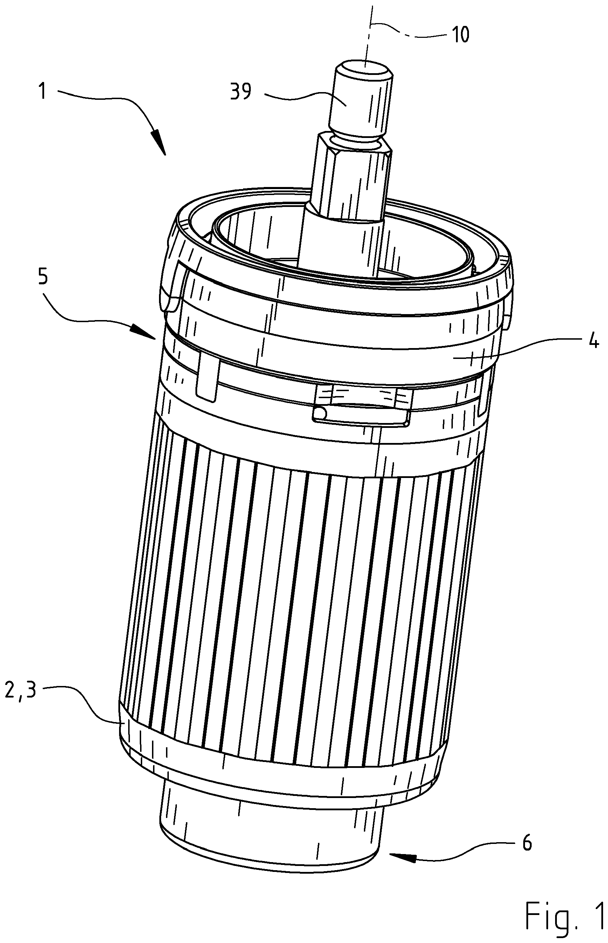

**Fig. 1** zeigt in einer perspektivischen Ansicht den Elektromotor 1.

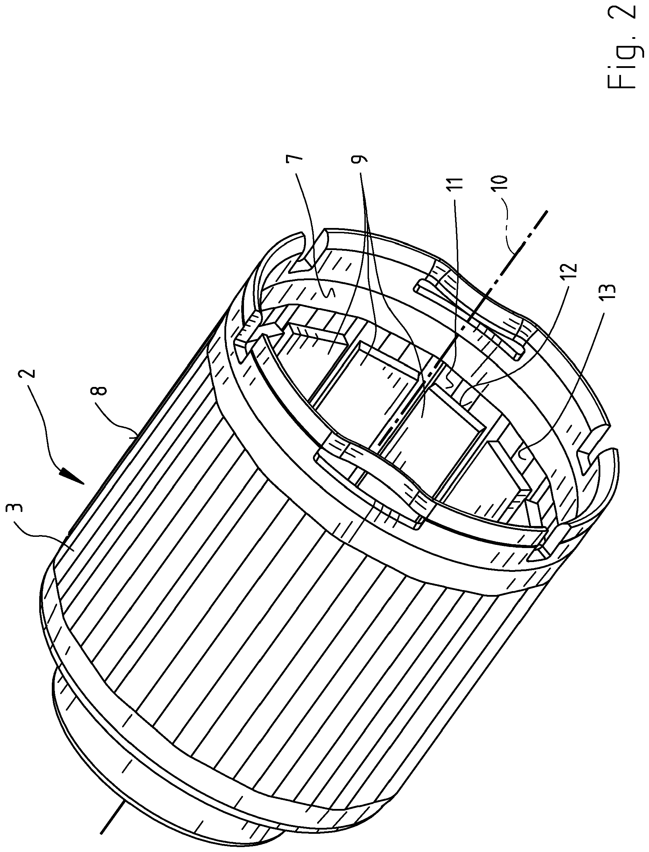

**Fig. 2** zeigt in einer perspektivischen Ansicht den Außenrotor 2 des Elektromotors 1. Das Rotorgehäuse 3 ist hohlzylinderartig ausgestaltet und weist eine Innenfläche 7 sowie eine Außenfläche 8 auf. Die Innenfläche 7 weist eine Mehrzahl von Magneten 9 in Form von Permanentmagneten auf, welche stabförmig ausgebildet sind. Die Mehrzahl von Magneten 9 wird im Weiteren als Stabmagneten bezeichnet. Zur einfachen und gesicherten Aufnahme der Stabmagneten 9 sind an der Innenfläche 7 Aufnahmeflächen 11 ausgebildet, wobei eine Anzahl der Aufnahmeflächen 11 der Anzahl der Stabmagneten 9 entspricht.

Die Stabmagneten 9 sind bevorzugt quaderförmig aufgebaut und somit auf einfache Weise herstellbar. Auf den relativ zur Aufnahmefläche 11 seitlichen Flächen und/oder auf der von dieser abgewandten Fläche können die Stabmagneten 9 alternativ Flächen haben, bei denen die Winkel nicht rechtwinklig sind. Zur Aufnahme eines einzelnen Stabmagneten 9 an seiner vorgesehenen Aufnahmefläche 11 ist die Aufnahmefläche 11 überwiegend plan, d.h. eben, sowohl in Umfangsrichtung des Rotorgehäuses 3 als auch in Längsrichtung entlang der Rotationsachse 10 ausgestaltet, sodass der Stabmagnet 9 mit seiner der Innenfläche 7 zugewandten Fixierfläche 12 eben fixiert ist.

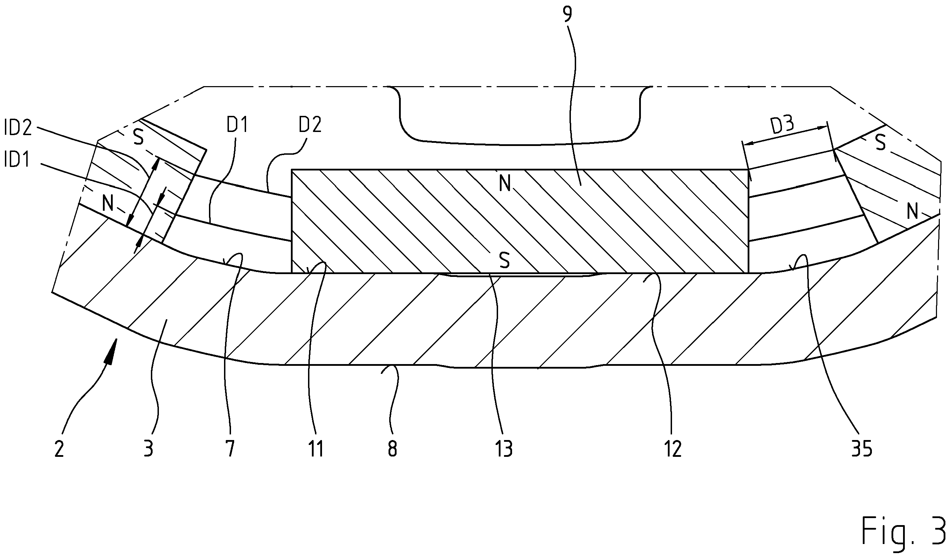

Die Aufnahmeflächen 11 weisen jeweils eine Vertiefung 13 auf, wobei diese Vertiefung 13 nutartig ausgebildet ist, wie in **Fig. 3** gezeigt. Diese Vertiefung 13 kann beispielsweise in einem zur Produktion des Rotorgehäuses 3 geeigneten Tiefziehverfahren hergestellt werden. Ebenso könnten die Vertiefungen 13 auch im Anschluss an das Tiefziehverfahren beispielsweise durch Fräsen in das Rotorgehäuse 3 eingebracht werden, wodurch allerdings eine Faserrichtung des Werkstoffs zerstört werden würde und dies eine weniger dauerhafte Haltbarkeit des Außenrotors 2 zur Folge hätte.

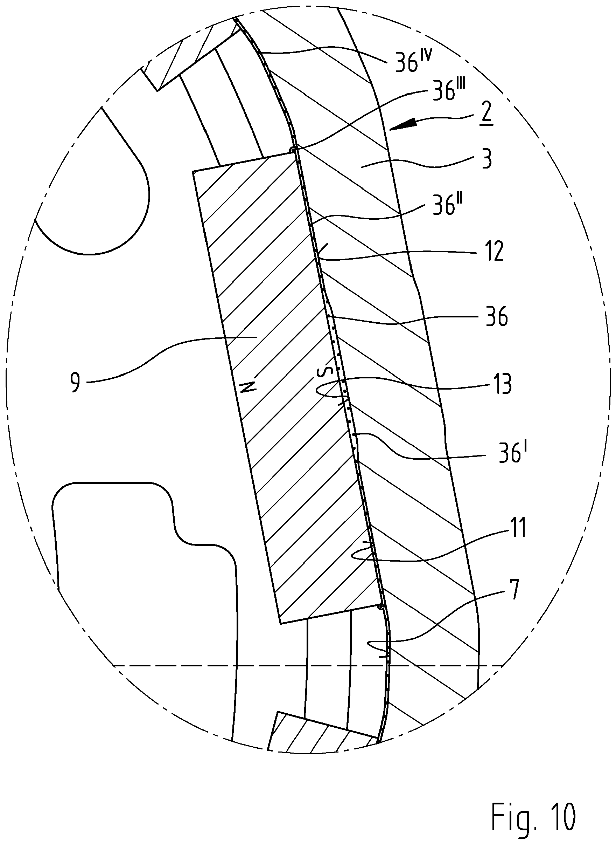

Die Vertiefungen 13 und die Aufnahmeflächen 11 werden mit einem in **Fig. 10** dargestellten adhäsiven Befestigungsmittel (Fixiermittel) 36, beispielsweise einem Klebemittel, versehen. Als Befestigungsmittel 36 ist z.B. der Klebstoff DELO-ML DB180 von der Firma DELO Industrie Klebstoffe, Windach, Deutschland, geeignet, der als chemische Basis modifiziertes Urethanacrylat hat, anaerob aushärtet und mit UV-Licht ausgehärtet werden kann. Alternativ kann der Klebstoff Loctite 3504 von der Firma Henkel verwendet werden, der als chemische Basis Urethanmethacrylat hat, und der mit Hilfe eines Aktivators aushärtet. Das Befestigungsmittel 36 wird vor der Fixierung der Stabmagneten 9 an ihren Aufnahmeflächen 11 auf die Aufnahmeflächen 11 und in die jeweilige nutartige Vertiefung 13 eingebracht. Dies erfolgt z.B. durch Anbringung des adhäsiven Befestigungsmittels 36 an einer inneren Stelle des Rotorgehäuses und durch anschließendes schnelles Drehen des Rotorgehäuses um dessen Rotationsachse 10. Hierdurch wird das adhäsive Befestigungsmittel über alle Aufnahmeflächen 11 und Vertiefungen 13 verteilt bzw. geschleudert. Alternativ kann bei ruhendem Rotorgehäuse eine Einspritzdüse für das adhäsive Befestigungsmittel 36 gedreht und axial verschoben werden, um das Befestigungsmittel 36 auf die Aufnahmeflächen 11 zu schleudern.

Zur Befestigung des Stabmagneten 9 an seiner Aufnahmefläche 11 wird der Stabmagnet 9 in einer Ausrichtung parallel zur Rotationsachse 10 in radialer Richtung auf die Aufnahmefläche 11 geführt, bis ein Kontakt zwischen der Aufnahmefläche 11 und der Fixierfläche 12 unter Zwischenschaltung des Befestigungsmittels 36 vorherrscht. Der Stabmagnet 9 wird sozusagen von innen nach außen gegen die Aufnahmefläche 11 gedrückt. An der Innenfläche 7 ausgebildete Wandungen, so genannte Schultern, gegen die die Stabmagneten 9 in axialer Richtung zur Arretierung gedrückt werden könnten, liegen bevorzugt aus Gründen der einfachen Herstellbarkeit des Rotorgehäuses 3 mit Hilfe des Tiefziehverfahrens nicht vor, sodass die Stabmagneten 9 somit in einer offenen Ebene positioniert werden, also vor der Fixierung in alle Richtungen parallel zur Aufnahmefläche 11 zumindest bereichsweise verschiebbar sind.

Bevorzugt sind die Magneten 9 bei einem Außenläufermotor radial magnetisiert, vgl. die mit N gekennzeichneten Nordpole und die mit S gekennzeichneten Südpole in Fig. 3, da der wirksame magnetische Fluss zwischen dem Innenstator 21 und dem Außenrotor 2 fließen soll. Die Magnetisierung der Magneten 9 erfolgt bevorzugt nach der Fixierung der Magneten 9 im Rotorgehäuse 3, wobei die Magnetisiervorrichtung hierfür von der Innenseite des Rotorgehäuses 3 her in die Nähe der Magneten 9 positioniert wird.

In der Ausführungsform der Fig. 3 ist der Abstand zweier benachbarter Magneten 9 voneinander mit D1, D2 und D3 bezeichnet, wobei der jeweilige Abstand an unterschiedlichen vorgegebenen Innenflächenabständen ID1, ID2 und dem maximalem Innenflächenabstand von der Innenfläche 7 eingezeichnet ist. Es ist zu sehen, dass der Abstand D1, D2, D3 mit zunehmendem Innenflächenabstand zumindest bereichweise abnimmt, wobei dies bevorzugt über den gesamten Bereich der Fall ist. Dies erleichtert das Halten und Anpressen der Magneten 9 bei der Montage. Der minimale Abstand zwischen zwei benachbarten Magneten 9 ist bei D3, und D3 ist somit ein vorgegebener Mindestabstand zwischen den Magneten.

Zwischen jeweils zwei Aufnahmeflächen 11 ist ein Übergang 35 ausgebildet derart, dass sowohl ein zwischen der Stabmagneten 9 zur Erzielung eines entsprechenden Magnetfeldes als auch zur Montage ausreichender Abstand vorliegt, wobei die Innenfläche 7 eine im Wesentlichen 14-Kant-Polygon-Querschnittskontur zur Aufnahme von vierzehn Stabmagneten 9 aufweist. Diese Anzahl von vierzehn Stabmagneten 9 bzw. vierzehn Rotorpolen hat sich beim vorliegenden Elektromotor als gut erwiesen, da eine hohe Leistungsdichte erzielt werden kann. In anderen Anwendungsfällen kann jedoch auch eine andere Anzahl von Rotorpolen bzw. Magneten 9 verwendet werden. Die Anzahl der Statorpole hängt einerseits von der Anzahl der Rotorpole und andererseits vom verwendeten Motortyp ab, also z.B. 1-phasig oder 3-phasig.

Die Querschnittskontur des Übergangs 35 ist bevorzugt konkav ausgebildet, um eine guten Verteilung des Klebemittels über den Umfang der Innenfläche 7 zu ermöglichen. Der Übergang zwischen der Vertiefungen 13 und den Aufnahmeflächen 11 muss dabei nicht konkav sein, da die Vertiefungen 13 in einem vorgegebenen axialen Bereich bevorzugt komplett mit dem Klebemittel gefüllt werden.

Eine Aushärtung des Befestigungsmittels 36 zur gesicherten Fixierung des Stabmagneten 9 an der Aufnahmefläche 11 erfolgt beispielsweise mit Hilfe einer UV-Licht-Bestrahlung. Hierdurch wird auch im aeroben Bereich eine Aushärtung des Befestigungsmittels erreicht. Ein Aushärten ist auch durch Einbringen eines Aktivators möglich.

Fig. 10 zeigt schematisch die Verteilung des adhäsiven Befestigungsmittels 36 nach dem Aushärten bei einer Anbringung des adhäsiven Befestigungsmittels 36 über den gesamten Innenumfang der Innenfläche 7 in einem vorgegebenen axialen Bereich, wie dies z.B. durch das oben beschriebene Rotieren des Rotorgehäuses 3 erzeugt wird. Das Befestigungsmittel 36 ist im Bereich der Vertiefung 13 (36'), zwischen dem Magneten 9 und der Aufnahmefläche 11 (36"), und im Bereich zwischen den benachbarten Magneten 9 (36^{IV}). Zudem bilden sich am Rande des Magneten 9 durch das Andrücken der Magneten 9 an die Aufnahmefläche 11 kleine Wulste des adhäsiven Befestigungsmittels (36'"), die z.B. durch UV-Licht ausgehärtet werden.

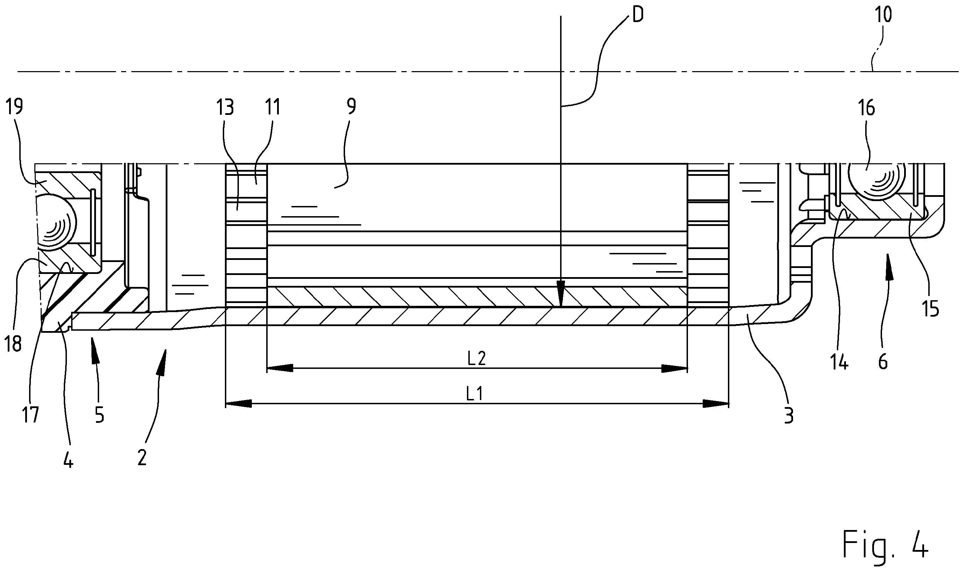

Wie in Fig. 4 zu sehen ist, weisen die Vertiefungen 13 eine erste Länge L1 auf, die bevorzugt größer ist als eine zweite Länge L2 eines einzelnen Stabmagneten 9. Dies hat den Vorteil, dass überschüssiges Befestigungsmittel 36 sich entlang der Vertiefung 13 verteilen kann, ohne eine vorgesehene Endlage des Stabmagneten 9 in radialer oder axialer Richtung zu beeinflussen. Unter der Endlage ist die Position des Stabmagneten 9 zu verstehen, welche im gefertigten und betriebsbereiten Zustand des Elektromotors 1 vorgesehen ist. Das überschüssige Befestigungsmittel 36 kann sich in den Längenabschnitten der Vertiefung 13, welche nicht von dem Stabmagneten 9 überdeckt werden, sammeln und wird beim Aushärten ebenfalls ausgehärtet.

Das hohlzylinderartig bzw. im Querschnitt zumindest bereichsweise ringförmig ausgebildete Rotorgehäuse 3 weist einen Innendurchmesser D auf, welcher ausgehend von dem ersten Ende 5 bis zu dem zweiten Ende 6 in Richtung der Rotationsachse 10 abschnittsweise konstant oder abnehmend ausgebildet ist, wie in Fig. 4 erkennbar ist. Dies begünstigt die Herstellung des Rotorgehäuses 3 im Tiefziehverfahren, sodass vollständig auf eine Nachbearbeitung, wie bspw. Fräsen verzichtet werden kann, dessen Nachteil bereits genannt wurde.

Das Rotorgehäuse 3 des Ausführungsbeispiels ist mit Hilfe eines 12-stufigen Tiefziehwerkzeugs hergestellt.

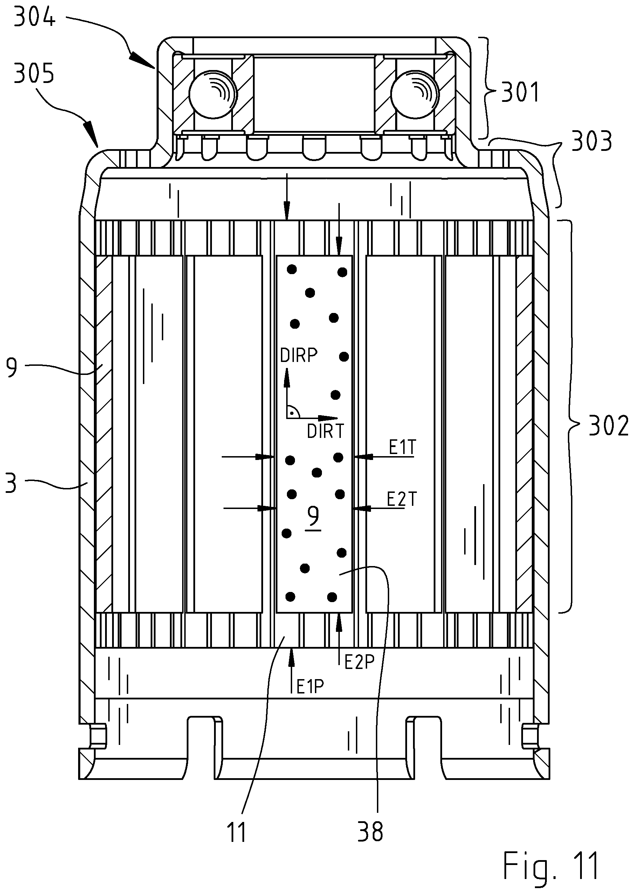

Das Rotorgehäuse 3 hat bevorzugt einen Kragen 304 (vgl. Fig. 11), der auch als abgesetzter Kragen bezeichnet werden kann, welcher Kragen 304 in Form eines ersten Lagersitzes 14 ausgebildet ist und zur Aufnahme eines ersten Lagers 16 vorgesehen ist. Das erste Lager 16 ist bevorzugt in Form eines Kugellagers ausgestaltet und weist einen ersten Lagerkäfig bzw. Außenring 15 auf, welcher bevorzugt verdrehfest im Lagersitz 14 aufgenommen ist. Das bevorzugt aus Stahl hergestellte Rotorgehäuse 3 ist besonders dazu geeignet, den ersten Lagerkäfig 15 mit Hilfe einer so genannten Verstemmung zu halten, derart, dass eine stoffschlüssige Verbindung durch bspw. Kleben oder ein zusätzliches Sicherungselement zur drehfesten und axialen Fixierung des ersten Lagers 16 nicht zwingend erforderlich ist.

Wie in Fig. 11 zu sehen ist, hat das Rotorgehäuse 3 am zweiten Ende 6 bevorzugt einen ersten Rotorgehäuseabschnitt 301 mit einem Innendurchmesser D, welcher kleiner ist als der Innendurchmesser D des Rotorgehäuses in einem zweiten Rotorgehäuseabschnitt 302, in dem die Magneten befestigt sind. Hierdurch kann am zweiten Ende 6 der Lagersitz 14 gebildet werden.

Bevorzugt hat das Rotorgehäuse 3 in einem dritten Rotorgehäuseabschnitt 303, welcher zwischen dem ersten Rotorgehäuseabschnitt und dem zweiten Rotorgehäuseabschnitt 302 angeordnet ist, eine Verjüngung, der Außendurchmesser des Rotorgehäuses wird also zum ersten Rotorgehäuseabschnitt 301 hin geringer. Dies spart zum einen Gewicht, und zum anderen kann gemäß dieser bevorzugten Ausgestaltung ein Lagersitz 14 mit geringerem Durchmesser gebildet werden, ohne dass die Wandstärke des Rotorgehäuses hierfür groß erhöht werden muss.

Bevorzugt sind der Lagersitz 14 und das Rotorgehäuse 3 einstückig ausgebildet. Dies ist z.B. in einem Tiefziehprozess in vorteilhafter Weise möglich.

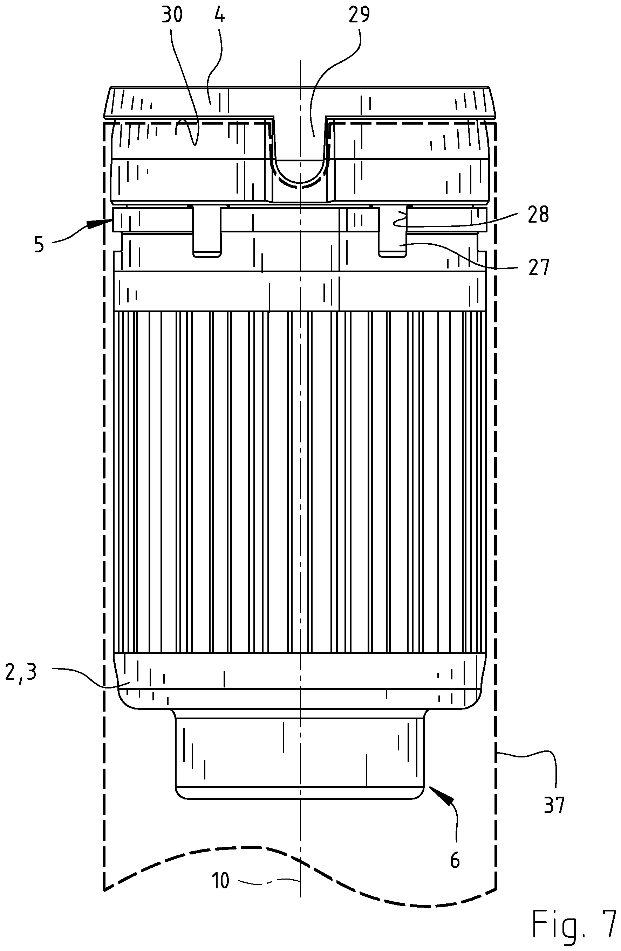

Anderenends des Rotorgehäuses 3, an seinem ersten Ende 5, ist der Rollenflansch 4 zur Fixierung einer das Rotorgehäuse 3 und den Rollenflansch 4 mindestens teilweise umfassenden, in Fig. 7 dargestellten Antriebsrolle 37 sowie zur Aufnahme des Innenstators 21 ausgebildet. Der Rollenflansch 4 weist einen zweiten Lagersitz 17 zur Aufnahme eines zweiten Lagerkäfigs bzw. Außenrings 18 eines zweiten Lagers 19, ebenfalls in Form eines Kugellagers bzw. allgemein eines Wälzlagers oder eines anderen Lagertyps, auf.

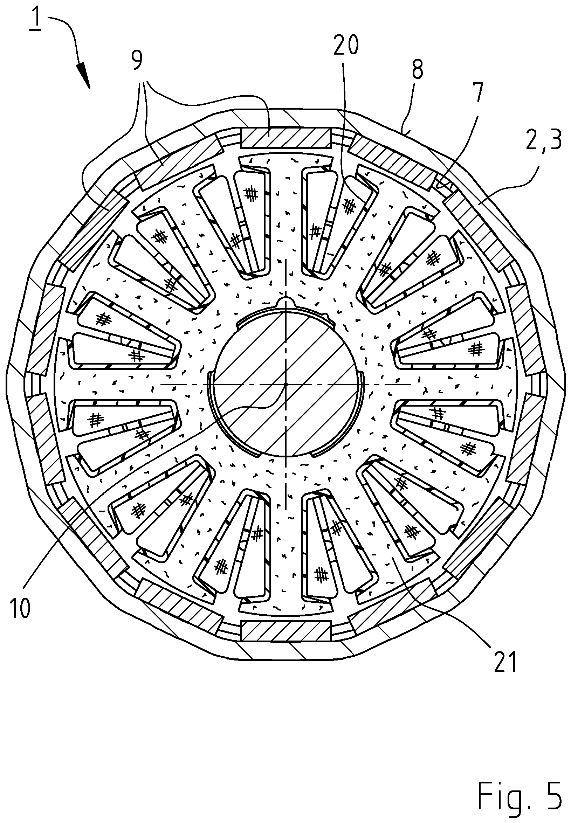

In **Fig. 5** ist das Rotorgehäuse 3 des Elektromotors in einem Querschnitt dargestellt. Den Stabmagneten 9 gegenüberliegend sind Wicklungsnuten bzw. Wicklungshohlräume 20 des Innenstators 21 vorgesehen. Das vorliegende Ausführungsbeispiel weist insgesamt zwölf Wicklungshohlräume 20 auf.

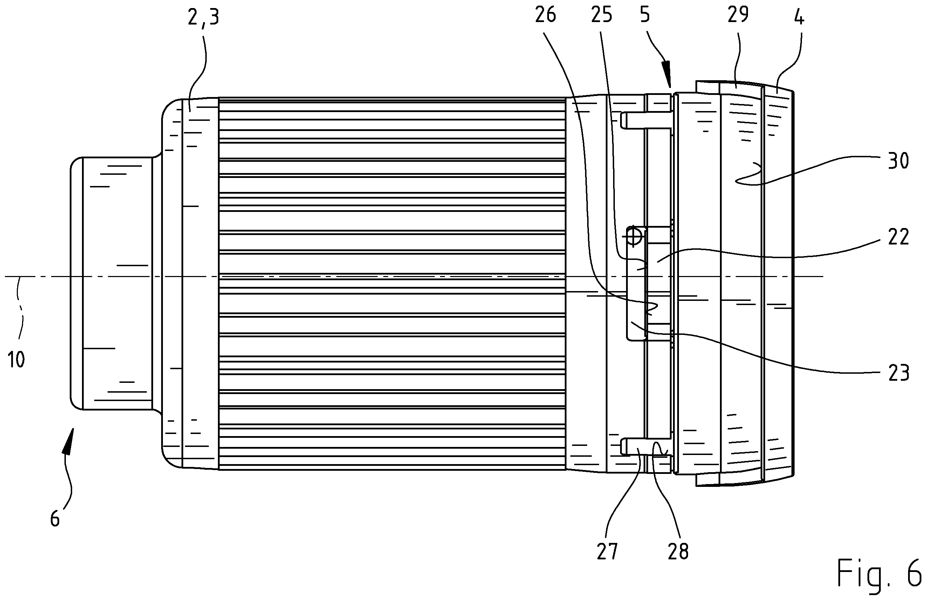

Wie in Fig. 6 bis Fig. 9 dargestellt, ist der Rollenflansch 4 mit Hilfe mehrerer Fixierelemente zur Übertragung eines Drehmoments des Rotorgehäuses 3 bzw. zur gesicherten Aufnahme von aus dem Drehmoment resultierenden Axial- und Radialkräften ausgebildet.

In einer ersten Seitenansicht gemäß **Fig. 6**, die das Rotorgehäuse 3 und den Rollenflansch 4 in einem gefügten Teilezustand zeigt, sind insbesondere ein erstes Fixierelement 22 sowie ein komplementär zum ersten Fixierelement 22 ausgebildetes zweites Fixierelement 23 zur Axialkraftaufnahme erkennbar. Das erste Fixierelement 22 ist dabei am ersten Ende 5 des Rotorgehäuses 3 stegförmig ausgebildet. Das zweite Fixierelement 23 ist am dritten Ende 24 des Rollenflansches 4 u-förmig zur radialen Aufnahme des ersten Fixierelementes 22 ausgestaltet, wobei eine dem zweiten Fixierelement 23 zugewandt positionierte Stegfläche 25 des ersten Fixierelementes 22 sich an einer der Stegfläche 25 zugewandt positionierten Kontaktfläche 26 des zweiten Fixierelementes 23 abstützt, sodass die Axialkraftaufnahme ausgebildet ist.

Zur Übertragung eines die Axial- und Radialkräfte induzierenden Drehmoments sind Arretierzapfen 27 am Rollenflansch 4 ausgebildet, welche in zu den Arretierzapfen 27 komplementären Arretiernuten 28 am Rotorgehäuse 3 aufgenommen sind. Des Weiteren sind am Rollenflansch 4 Fixierzapfen 29 zur Positionierung und Fixierung der in Fig. 7 dargestellten Antriebsrolle 37 vorgesehen. Die Antriebsrolle 37 ist über das Rotorgehäuse 3 und den Rollenflansch 4 schiebbar, derart, dass sie das Rotorgehäuse 3 und den Rollenflansch 4 zumindest teilweise umfasst. Dabei wird sie bis zu einer am Rollenflansch 4 ausgebildeten Anlageschulter 30 in ihre Endposition geschoben, wo sie mit Hilfe der Fixierzapfen 29 unverdrehbar fixiert ist. Als besonders geeignet hat sich eine Positionierung von zwei einander gegenüberliegenden, d.h. um 180° über einen Umfang des Rollenflansch 4 versetzt zueinander positionierten Fixierzapfen 29 herausgestellt. In Fig. 7, einer zweiten Seitenansicht des Rotorgehäuses 3 und des Rollenflansches 4 in einem gefügten Teilezustand, welche das Rotorgehäuse 3 und den Rollenflansch 4 gegenüber der ersten Seitenansicht um 90° um die Rotationsachse 10 gedreht zeigt, ist der Fixierzapfen 29 in einer Draufsicht dargestellt.

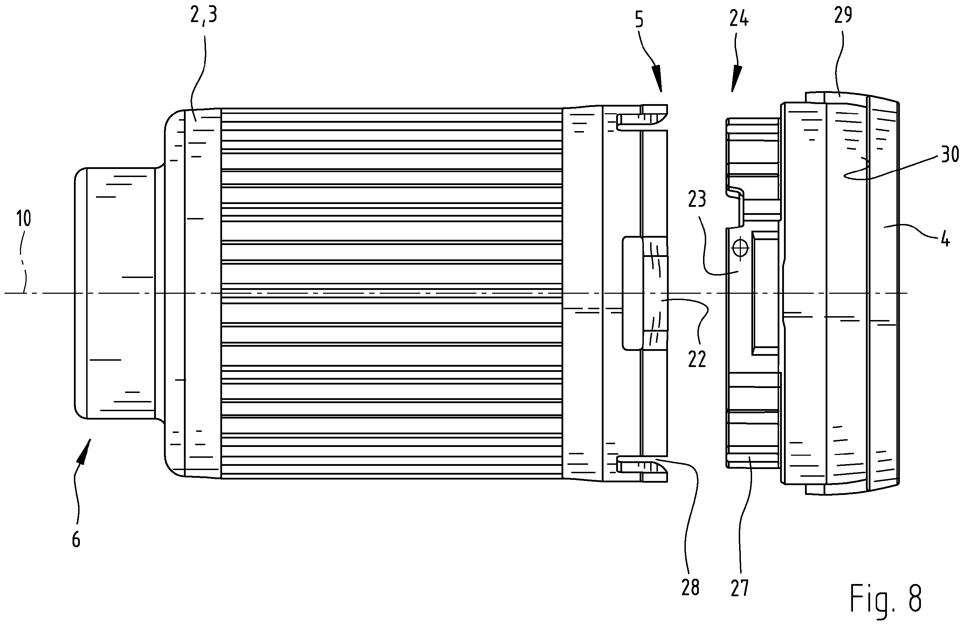

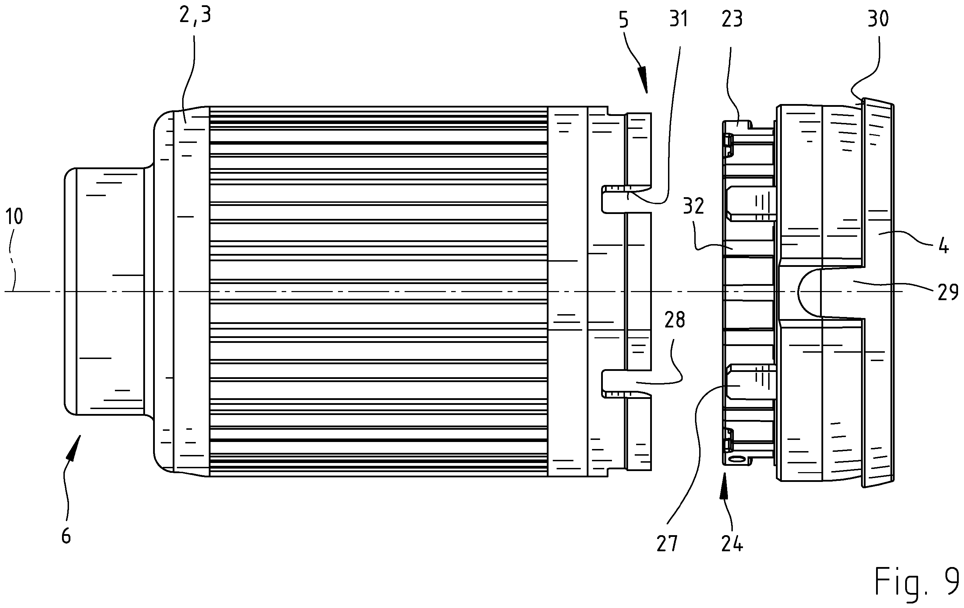

Die **Fig. 8** und **Fig. 9** zeigen in der ersten Seitenansicht bzw. der zweiten Seitenansicht das Rotorgehäuse 3 und den Rollenflansch 4 in einem ungefügten Teilezustand, wobei insbesondere Fig. 9 ein drittes Fixierelement 31 und ein viertes Fixierelement 32 erkennbar sind. Das dritte Fixierelement 31 entspricht der Innenfläche 7 des Rotorgehäuses 3 an einem ersten Endabschnitt 33, wobei der erste Endabschnitt 33 einen zweiten Endabschnitt 34 des Rollenflansches 4 am dritten Ende 24 aufnehmbar ausgestaltet ist. Zur Aufnahme von Radialkräften ist am zweiten Endabschnitt 34 über dessen Umfang das vierte Fixierelement 32 in Form von Deformationsrippen 32 angeordnet.

**Fig. 11** zeigt eine Ansicht einer Aufnahmefläche 11, gesehen von der Rotationsachse 10. Ein Verbindungsbereich 38 ist gepunktet dargestellt und entspricht dem Bereich, in dem der Magnet 9 und die Aufnahmefläche 11 benachbart angeordnet sind, also nebeneinander liegen. Bei einem quaderförmigen Magneten 9 entspricht der Verbindungsbereich in der Ansicht von innen der radial inneren Fläche des Magneten 9. Zumindest in diesem Verbindungsbereich 38 ist bevorzugt nach der Montage das adhäsive Befestigungsmittel vorgesehen. Eine erste Richtung DIRP ist parallel zur Rotationsachse 10 gezeigt, und eine zweite Richtung DIRT ist senkrecht zur ersten Richtung DIRP und damit tangential eingezeichnet, wobei diese Richtungen DIRT und DIRP in der Aufnahmefläche angeordnet sind. Die Erstreckung des Magneten 9 in die Richtung DIRT ist mit E2T und in die Richtung DIRP mit E2P bezeichnet. Die Erstreckung der Aufnahmefläche 11 in die Richtung DIRT ist mit E1T und in die Richtung DIRP mit E1P bezeichnet. Bevorzugt ist E1P größer als E2P und E1T größer als E2T. E1P und E2P und/oder E1T und E2T können aber auch gleich groß sein. Bevorzugt erstreckt sich die Aufnahmefläche 11 auf allen Seiten des Verbindungsbereichs 38 über diesen hinaus.

Mit dem Elektromotor 1 wurde eine Antriebsrolle 37 mit 600 mm Länge und 50 mm Durchmesser angetrieben. Es wurden starke Beschleunigungen von beispielsweise 2 m/s² getestet, und die Magneten 9 haben sich dabei nicht abgelöst, sondern waren gut fixiert.

Naturgemäß sind im Rahmen der vorliegenden Erfindung vielfältige Abwandlungen möglich.

Die zweiteilige Ausbildung mit dem Rotorgehäuse 3 und dem Rollenflansch 4 ist vorteilhaft, dieser Motoraufbau ist aber nicht zwingend erforderlich für die erfindungsgemäße Magnetanordnung.

Das Rotorgehäuse kann z.B. auch nach Art eines Rotortopfs in einen Boden übergehen, und an dem Boden kann eine Welle vorgesehen sein, die beispielsweise in einem Lagerrohr gelagert ist.

## Patentansprüche

1. Elektromotor, mit einem Innenstator (21) und einem Außenrotor (2), welcher Außenrotor (2) ein Rotorgehäuse (3) und eine Mehrzahl von Magneten (9) aufweist und zur Drehung um eine Rotationsachse (10) ausgebildet ist,
welche Magneten (9) in Form von Stabmagneten ausgebildet sind, welches Rotorgehäuse (3) eine Innenfläche (7), ein erstes Ende (5) und ein dem ersten Ende (5) gegenüber liegendes zweites Ende (6) aufweist, welche Innenfläche zur Aufnahme der Magneten Aufnahmeflächen (11) aufweist,
welche Aufnahmeflächen (11) jeweils zur Anordnung eines der Magneten (9) dienen und welche Magneten (9) jeweils mit Hilfe eines adhäsiven Befestigungsmittels (36) an einer der Aufnahmeflächen (11) fixiert sind,
**dadurch gekennzeichnet, dass**
am zweiten Ende (6) des Rotorgehäuses (3) ein erster Lagersitz (14) -zur - Aufnahme eines ersten Lagerkäfigs (15) ausgebildet ist, welches Rotorgehäuse (3) am zweiten Ende (6) einen ersten Rotorgehäuseabschnitt (301) mit einem Innendurchmesser (D) aufweist, welcher Innendurchmesser kleiner ist als der Innendurchmesser (D) des Rotorgehäuses (3) in einem zweiten Rotorgehäuseabschnitt (302), in dem die Magneten (9) befestigt sind, um hierdurch am zweiten Ende (6) den Lagersitz (14) zu bilden, und dass die Aufnahmeflächen (11) jeweils eine nutartige Vertiefung (13) aufweisen, sich die nutartigen Vertiefungen (13) in eine Richtung parallel zur Rotationsachse (10) erstrecken und die nutartigen Vertiefungen (13) in Richtung parallel zur Rotationsachse (10) eine erste Länge (L1) aufweisen, welche größer ist als eine zweite Länge (L2) der Mehrzahl von Magneten (9), welche sich in Richtung parallel zur Rotationsachse (10) erstreckt, so dass sich ein überschüssiges adhäsives Befestigungsmittel in der Vertiefung in den Bereichen, welche nicht von den Stabmagneten bedeckt werden sammeln kann, ohne dass eine plane Fixierung des Stabmagneten am Magnetsitz durch das überschüssige adhäsive Befestigungsmittel aufgehoben wird.

2. Elektromotor nach Anspruch 1, bei welchem die Aufnahmeflächen (11) sowohl in Richtung parallel zur Rotationsachse (10) des Rotorgehäuses (3) als auch in einer Umfangsrichtung der Innenfläche (7) mindestens überwiegend plan ausgebildet sind.

3. Elektromotor nach Anspruch 2,
bei welchem die Erstreckung (E1P) der Aufnahmeflächen (11) jeweils in einer ersten Richtung (DIRP), welche parallel zur Rotationsachse (10) ist, größer ist als die Erstreckung (E2P) des zugeordneten Magneten (9) in die erste Richtung (DIRP), und
bei welchem die Erstreckung (E1T) der Aufnahmeflächen (11) jeweils in einer zweiten Richtung (DIRT), welche senkrecht zur ersten Richtung (DIRP) ist, größer ist als die Erstreckung (E2T) des zugeordneten Magneten (9) in die zweite Richtung (DIRT).

4. Elektromotor nach Anspruch 3,
bei welchem die Aufnahmeflächen (11) und die zugeordneten Magneten (9) jeweils einen Verbindungsbereich (38) aufweisen, in dem sie benachbart zueinander angeordnet sind, wobei sich die Aufnahmeflächen (11) jeweils auf allen Seiten des Verbindungsbereichs (38) über diesen hinaus erstrecken, sodass an der Innenfläche (7) keine Schulter vorgesehen ist, gegen welche die Mehrzahl von Magneten (9) anliegt,
und bei welchem Elektromotor bevorzugt die Querschnittskontur des Übergangs (35) der Innenfläche (7) zwischen zwei benachbarten Aufnahmeflächen (11) konkav ausgebildet ist.

5. Elektromotor nach einem der vorherigen Ansprüche, bei welchem die Innenfläche (7) eine polygonartig ausgebildete Querschnittskontur aufweist, wobei bevorzugt die Innenfläche (7) eine 14-Kant- Polygon-Querschnittskontur aufweisend ausgebildet ist.

6. Elektromotor nach einem der vorherigen Ansprüche, bei welchem das Rotorgehäuse (3) einen Innendurchmesser (D) aufweist, welcher ausgehend von dem ersten Ende (5) des Rotorgehäuses (3) bis zum zweiten Ende (6) des Rotorgehäuses (3) konstant oder abnehmend ausgebildet ist und bei welchem Elektromotor sich das Rotorgehäuse (3) bevorzugt in einem dritten Rotorgehäuseabschnitt (303), welcher zwischen dem ersten Rotorgehäuseabschnitt (301) und dem zweiten Rotorgehäuseabschnitt (302) angeordnet ist, unter Ausbildung einer Schulter (305) verjüngt.

7. Elektromotor nach einem der vorhergehenden Ansprüche, bei welchem der Lagersitz (14) und das Rotorgehäuse (3) einstückig ausgebildet sind.

8. Elektromotor nach einem der vorhergehenden Ansprüche, bei welchem die Magneten (9) in Form von quaderförmigen Stabmagneten ausgebildet sind.

9. Elektromotor nach einem der vorhergehenden Ansprüche, bei welchem der Abstand zwischen zwei benachbarten Magneten (9) in einem vorgegebenen Innenflächenabstand von der jeweils zugeordneten Innenfläche (7) des Rotorgehäuses (3) bei zunehmendem Innenflächenabstand zumindest bereichsweise abnimmt.

10. Elektromotor nach einem der vorhergehenden Ansprüche, bei welchem zwischen zwei Magneten (9) immer ein vorgegebener Mindestabstand (D3) vorgesehen ist.

11. Elektromotor nach einem der vorhergehenden Ansprüche, bei welchem die Mehrzahl von Magneten (9) aus einem permanentmagnetischen Werkstoff ausgebildet ist, bevorzugt überwiegend aus einem magnetisch anisotropen Werkstoff.

12. Elektromotor nach einem der vorhergehenden Ansprüche, bei welchem die Mehrzahl von Magneten (9) aus einem gesinterten Werkstoff ausgebildet ist.

13. Elektromotor nach einem der vorhergehenden Ansprüche, bei welchem das Rotorgehäuse (3) durch ein Tiefziehverfahren als Tiefziehteil ausgebildet ist.

14. Antriebsrolle mit einem Elektromotor nach einem der vorhergehenden Ansprüche.

## Claims

1. Electric motor having an inner stator (21) and an outer rotor (2), which outer rotor (2) has a rotor housing (3) and a plurality of magnets (9) and is formed for rotation about a rotation axis (10),
which magnets (9) are in the form of bar magnets, which rotor housing (3) has an inner surface (7), a first end (5) and a second end (6) opposite the first end (5), which inner surface has receiving surfaces (11) for receiving the magnets,
which receiving surfaces (11) each serve to arrange one of the magnets (9), and which magnets (9) are each fixed to one of the receiving surfaces (11) with the aid of an adhesive fixing means (36),
**characterized in that**
a first bearing seat (14) for receiving a first bearing cage (15) is formed at the second end (6) of the rotor housing (3),
which rotor housing (3) has a first rotor housing portion (301) with an inner diameter (D) at the second end (6), which inner diameter is smaller than the inner diameter (D) of the rotor housing (3) in a second rotor housing portion (302) in which the magnets (9) are fixed, thereby forming the rotor seat (14) at the second end (6),
and that the receiving surfaces (11) each have a groove-like recess (13),
the groove-like recesses (13) extend in a direction parallel to the rotation axis (10) and the groove-like recesses (13) have a first length (L1) in the direction parallel to the rotation axis (10) which is greater than a second length (L2) of the plurality of magnets (9) extending in the direction parallel to the rotation axis (10), so that an excess adhesive fastener can collect in the recess in the areas not covered by the bar magnets, without a planar fixing of the bar magnet to the magnet seat being cancelled out by the excess adhesive fastener.

2. Electric motor according to claim 1, wherein the receiving surfaces (11) are at least predominantly flat both in a direction parallel to the rotation axis (10) of the rotor housing (3) and in a circumferential direction of the inner surface (7).

3. Electric motor according to claim 2,
wherein the extension (E1P) of the receiving surfaces (11) respectively in a first direction (DIRP), which is parallel to the rotation axis (10), is greater than the extension (E2P) of the corresponding magnet (9) in the first direction (DIRP), and
wherein the extension (E1T) of the receiving surfaces (11) respectively in a second direction (DIRT), which is perpendicular to the first direction (DIRP), is greater than the extension (E2T) of the corresponding magnet (9) in the second direction (DIRT).

4. Electric motor according to claim 3,
wherein the receiving surfaces (11) and the corresponding magnets (9) each have a connecting region (38) in which they are arranged adjacent to one another, the receiving surfaces (11) each extending beyond the connecting region (38) on all sides thereof, so that no shoulder is provided on the inner surface (7) against which the plurality of magnets (9) rests,
and wherein the cross-sectional contour of the transition (35) of the inner surface (7) between two adjacent receiving surfaces (11) is preferably concave.

5. Electric motor according to one of the preceding claims, wherein the inner surface (7) has a polygon-like cross-sectional contour, wherein the inner surface (7) is preferably formed with a 14-edge polygon cross-sectional contour.

6. Electric motor according to one of the preceding claims, wherein the rotor housing (3) has an inner diameter (D) which is constant or decreasing from the first end (5) of the rotor housing (3) to the second end (6) of the rotor housing (3), and wherein the rotor housing (3) tapers preferably in a third rotor housing section (303), which is arranged between the first rotor housing section (301) and the second rotor housing section (302), forming a shoulder (305).

7. Electric motor according to one of the preceding claims, wherein the bearing seat (14) and the rotor housing (3) are formed integrally.

8. Electric motor according to one of the preceding claims, wherein the magnets (9) are designed in the form of cuboid bar magnets.

9. Electric motor according to one of the preceding claims, wherein the distance between two adjacent magnets (9) at a predetermined inner surface distance from the respectively corresponding inner surface (7) of the rotor housing (3) decreases at least in regions with increasing inner surface distance.

10. Electric motor according to one of the preceding claims, wherein a predetermined minimum distance (D3) is always provided between two magnets (9).

11. Electric motor according to one of the preceding claims, wherein the plurality of magnets (9) is formed from a permanent magnetic material, preferably predominantly from a magnetically anisotropic material.

12. Electric motor according to one of the preceding claims, wherein the plurality of magnets (9) is formed of a sintered material.

13. Electric motor according to one of the preceding claims, wherein the rotor housing (3) is formed as a deep-drawn part by a deep-drawing process.

14. Drive roller with an electric motor according to one of the preceding claims.

## Revendications

1. Moteur électrique, avec un stator intérieur (21) et un stator extérieur (2), lequel stator extérieur (2) présente un carter de rotor (3) et une pluralité d'aimants (9) et est réalisé pour la rotation autour d'un axe de rotation (10),
lesquels aimants (9) sont réalisés en forme de barreaux aimantés, lequel carter de rotor (3) présente une surface intérieure (7), une première extrémité (5) et une deuxième extrémité (6) opposée à la première extrémité (5), laquelle surface intérieure présente des surfaces de réception (11) pour la réception des aimants, lesquelles surfaces de réception (11) servent respectivement à l'agencement d'un des aimants (9) et lesquels aimants (9) sont fixés respectivement à l'aide d'un moyen de fixation adhésif (36) au niveau d'une des surfaces de réception (11),
**caractérisé en ce que**
un premier siège de palier (14) est réalisé à la deuxième extrémité (6) du carter de rotor (3) pour la réception d'une première cage de palier (15),
lequel carter de rotor (3) présente à la deuxième extrémité (6) une première section de carter de rotor (301) avec un diamètre intérieur (D), lequel diamètre intérieur est inférieur au diamètre intérieur (D) du carter de rotor (3) dans une deuxième section de carter de rotor (302), dans laquelle les aimants (9) sont fixés afin de former ainsi à la deuxième extrémité (6) le siège de palier (14),
et que les surfaces de réception (11) présentent respectivement un évidement en forme de rainure (13), les évidements en forme de rainure (13) s'étendent dans une direction parallèle à l'axe de rotation (10) et les évidements en forme de rainure (13) présentent dans la direction parallèle à l'axe de rotation (10) une première longueur (L1), laquelle est supérieure à une deuxième longueur (L2) de la pluralité d'aimants (9), laquelle s'étend dans la direction parallèle à l'axe de rotation (10), de sorte qu'un moyen de fixation adhésif excédentaire peut s'accumuler dans l'évidement dans les zones, lesquelles ne sont pas couvertes par les barreaux aimantés, sans que soit supprimée une fixation plane du barreau aimanté au niveau du siège d'aimant par le moyen de fixation adhésif excédentaire.

2. Moteur électrique selon la revendication 1, dans lequel les surfaces de réception (11) sont réalisées au moins principalement planes aussi bien dans la direction parallèle à l'axe de rotation (10) du carter de rotor (3) que dans une direction circonférentielle de la surface intérieure (7).

3. Moteur électrique selon la revendication 2,
dans lequel l'extension (E1P) des surfaces de réception (11) respectivement dans une première direction (DIRP), laquelle est parallèle à l'axe de rotation (10), est supérieure à l'extension (E2P) de l'aimant associé (9) dans la première direction (DIRP), et dans lequel l'extension (E1T) des surfaces de réception (11) respectivement dans une deuxième direction (DIRT), laquelle est perpendiculaire à la première direction (DIRP), est supérieure à l'extension (E2T) de l'aimant associé (9) dans la deuxième direction (DIRT).

4. Moteur électrique selon la revendication 3,
dans lequel les surfaces de réception (11) et les aimants associés (9) présentent respectivement une zone de liaison (38), dans laquelle ils sont agencés de manière adjacente l'un à l'autre, dans lequel les surfaces de réception (11) s'étendent respectivement sur tous les côtés de la zone de liaison (38) au-delà de celle-ci, de sorte qu'aucun épaulement, contre lequel la pluralité d'aimants (9) s'appuie, n'est prévu au niveau de la surface intérieure (7),
et dans lequel moteur électrique est réalisé de manière concave de préférence le contour de section transversale du passage (35) de la surface intérieure (7) entre deux surfaces de réception (11) adjacentes.

5. Moteur électrique selon l'une quelconque des revendications précédentes, dans lequel la surface intérieure (7) présente un contour de section transversale réalisé de manière polygonale, dans lequel de préférence la surface intérieure (7) est réalisée en présentant un contour de section transversale polygonal à 14 côtés.

6. Moteur électrique selon l'une quelconque des revendications précédentes, dans lequel le carter de rotor (3) présente un diamètre intérieur (D), lequel est réalisé constant ou décroissant de la première extrémité (5) du carter de rotor (3) à la deuxième extrémité (6) du carter de rotor (3) et dans lequel moteur électrique le carter de rotor (3) se rétrécit de préférence dans une troisième section de carter de rotor (303), laquelle est agencée entre la première section de carter de rotor (301) et la deuxième section de carter de rotor (302), en formant un épaulement (305).

7. Moteur électrique selon l'une quelconque des revendications précédentes, dans lequel le siège de palier (14) et le carter de rotor (3) sont réalisés d'un seul tenant.

8. Moteur électrique selon l'une quelconque des revendications précédentes, dans lequel les aimants (9) sont réalisés en forme de barreaux aimantés parallélépipédiques.

9. Moteur électrique selon l'une quelconque des revendications précédentes, dans lequel la distance entre deux aimants adjacents (9) à une distance de surface intérieure prédéfinie de la surface intérieure (7) respectivement associée du carter de rotor (3) diminue au moins par zone pour une distance de surface intérieure croissante.

10. Moteur électrique selon l'une quelconque des revendications précédentes, dans lequel une distance minimum prédéfinie (D3) est toujours prévue entre deux aimants (9).

11. Moteur électrique selon l'une quelconque des revendications précédentes, dans lequel la pluralité d'aimants (9) est réalisée en un matériau magnétique permanent, de préférence principalement en un matériau magnétiquement anisotrope.

12. Moteur électrique selon l'une quelconque des revendications précédentes, dans lequel la pluralité d'aimants (9) est réalisée en un matériau fritté.

13. Moteur électrique selon l'une quelconque des revendications précédentes, dans lequel le carter de rotor (3) est réalisé par un procédé d'emboutissage en tant que pièce emboutie.

14. Rouleau d'entraînement avec un moteur électrique selon l'une quelconque des revendications précédentes.
